# EUROPEAN PATENT APPLICATION

(11) **EP 1 965 487 A1**
(43) Date of publication of application: **03.09.2008**
(21) Application number: 07004118.1
(22) Date of filing: 28.02.2007
(51) Int. Cl.: H02M 5/458, H02J 9/06

(54) **Uninterruptible power supply, connected to a grid**

(71) Applicant: Gamesa Innovation & Technology, S.L., 31013 Pamplona, Navarra (ES)
(72) Inventor: Andresen, Björn, 8600 Silkeborg (DK); Feddersen, Lorenz, 24941 Flensburg (DE)

(57) **Abstract**

The present invention relates to an Uninterruptible Power Supply (25) and a method for operating an Uninterruptible Power Supply, where the UPS (25) is connected between a grid (18) and a consumer (19), where the UPS is rectifying the power from the grid (18) for generating DC, which DC is used as source for an inverter, which inverter generates power for the consumer (19). The main object of the invention is to achieve UPS (25) to bridge the grid voltage drops by supplying power for one-phase or multi-phase consumer in a short period after a grid failure. The object can be achieved if the preamble to claim 1 is modified so that the DC link comprises a boost device, which boost device has at least one an input line, which input line is connected through rectifier means to the grid, which boost device has at least one output line, which output line is connected to the power conversion means. Hereby can be achieved that a power supply to a load can be maintained in a period of a few seconds where a grid failure will force mostly all consumers to a full or partly shut down. Most power failures on the grid have duration of a few seconds, but they can be of duration long enough for computerised consumers to get into an unwanted power down situation. Such a power down can be extremely dangerous for computer systems, e.g. if a hard disk is in a writing situation when a power failure occurs. If an UPS-device in connection with computer means could keep uninterrupted power for only 10-20 seconds that would be sufficient for many computer systems to shut down at least in a way of operation where the hard disks are been sent into a parking mode before the shut down. The use of the boost device instead of a battery will make this UPS-system much smaller simply because are typically lead accumulators which are very heavy and which have to be under continuous service management in order to be operational when power is needed.

## Description

### Field of the Invention

The present invention relates to an Uninterruptible Power Supply, which UPS is connected to a grid, which grid comprises at least one power line, which UPS comprises an input device, which input device comprises rectifier means, which conversion means is generating an output power supply from the UPS,

The present invention further relates to a method for operating an Uninterruptible Power Supply, where the UPS is connected between a grid and a consumer, where the UPS is rectifying the power from the grid for generating DC, which DC is used as source for an inverter, which inverter generates power for the consumer.

### Background of the Invention

Public power grids are has to be operated inside grid codes such as defined by the public power grids authorities. The grid code contains requirements that wind turbines must be able to fault-ride-through, i.e. not disconnect from the utility grid in case of a voltage drop. This means that an Uninterruptible Power Supply (UPS) device is necessary for the turbine own consumption (load) to ensure the safe operation of the turbine during the grid failure.

The voltage drop described in the requirements has a typical time period in the range of 0.1 - 3 seconds.

A rule of thumb indicate that the required power level of the UPS system is in the range of 0.5 -1 % of the total turbine power. For a 1MW turbine the own consumptions would therefore be in the range of 5 to 10kW.

A standard UPS system normally consists of a rectifier, a DC link, a battery pack and an inverter part. The battery pack is the energy source that provides power in case the main supply fails. Some disadvantages of this energy source are the following:
Batteries are temperature dependent. In case batteries are used as energy source its lifetime as well as its capacity is directly dependent of the ambient temperature. An increase in temperature above maximum allowed design results in a lower lifetime.

As batteries have a relatively low maximum design temperature (usually around 40°C) and as the expected temperature in a typical wind turbine can easily reach 55°C, additional cooling or other means of thermal removal is needed. A similar problem occurs when the batteries are exposed to temperatures below zero degrees. Heating elements are often necessary to avoid that the batteries are discharged due to low temperatures.

Deterioration of the battery cells can damage the energy capacity of the battery and as a result less power or backup time is available. The chemical processes of the batteries make it difficult to establish by measuring how much energy is stored in the battery at any given time. In traditional UPS systems the energy content is unknown until the battery pack is put into operation. In applications where the UPS perform safety operations this can give unwanted or dangerous situations. One way of reducing this risk is by making sure that the batteries are changed often by periodic service intervals or by applying special management systems to monitor and control the charging and discharging cycles. The battery pack itself takes up a considerable amount of space of the UPS system. And the batteries are heavy and handles uneasily. In a typical turbine the UPS is installed in the nacelle and as a result of the periodic changing of batteries the service engineers are exposed to extra work. The chemical processes inside the battery require a special packaging and intensive maintenance. Furthermore the batteries must be disposed in an environmental friendly way, causing extra costs and, if not handled correctly, a potential biohazard. It is therefore desirable to eliminate the batteries in the UPS devices for wind turbines and this invention deals with this challenge

### Object of the Invention

The main object of the invention is to achieve UPS to bridge the grid voltage drops by supplying power for one-phase or multi-phase consumer in a short period after a grid failure.

Another object is to protect auxiliary equipment connected to the UPS by serving as a harmonic filter and as PFC (Power factor correction) ensuring stable and good quality power supply.

### Description of the Invention

The object can be achieved if the preamble to claim 1 is modified so that the the UPS comprises a boost device, which boost device has at least one an input line, which input line is connected through rectifier means to the grid, which boost device has at least one output line, which output line is connected to the power conversion means.

Hereby can be achieved that a power supply to a load can be maintained in a period of a few seconds where a grid failure will force mostly all consumers to a full or partly shut down. Most power failures on the grid have duration of a few seconds, but they can be of a duration long enough for computerised consumers to get into an unwanted power down situation. Such a power down can be extremely dangerous for computer systems, e.g. if a hard disk is in a writing situation when a power failure occurs. If an UPS-device in connection with computer means could keep uninterrupted power for only 10-20 seconds that would be sufficient for many computer systems to shut down at least in a way of operation where the hard disks are been sent into a parking mode before the shut down. The use of the boost device instead of a battery will make this UPS-system much smaller simply because are typically lead accumulators which are very heavy and which have to be under continuous service management in order to be operational when power is needed.

In a possible embodiment the UPS comprises a DC link, which DC link is connected to power conversion means.

The UPS can operate in conjunction with a wind turbine, which wind turbine grid is connected to the input to the UPS as energy source, which wind turbine grid is full or partly in operation in a short period during utility grid faults, in which short period the UPS is in operation. In conjunction with a wind turbine, the UPS is necessary because the wind turbine comprises a computerised control system which controls e.g. the hydraulics and by help of hydraulic systems brakes and pitch of the wings. In a grid failure situation, the safety systems, in conjunction with the wind turbine, have to continue normal operation. If the grid failure has duration of only very few seconds, the wind turbine as such will not feel any interruption. If the grid failure is total and continues for a longer period, the UPS-system can generate sufficient power to the internal load as long as the windmill generator is rotating and producing at least some power.

The UPS can also be operating in conjunction with a wind turbine, which wind turbine is connected to a utility grid, which utility grid is connected to the input to the UPS as energy source, which utility grid is full or partly in operation in a short period during wind turbine grid faults, in which short period the UPS is in operation. In a situation where the wind turbine generator is generating the power failure, the UPS will continuously be connected to the utility grid in order to get a sufficient power supply. Even in a situation where also the utility grid has power failure, this UPS-system will be able to generate sufficient power for at least a period of several seconds.

The electrical power for a load can be connected through the UPS. Hereby can be achieved that the UPS also will be operating as a power filter in that way that the UPS as such will be operating as a high frequency filter for all frequencies which are sufficient higher as the grid frequency, and also act as PFC In this way will the power for the load be mostly free for disturbing short voltage peaks that probably are part of the power at the grid. These voltage peaks can be very unpleasant for e.g. a power supply in conjunction with a computer. Also noise generated in the load will be filtered out such that noise will not be transmitted to the grid.

The boost functionality can comprise at least one coil, which coil (or Inductance) is serial connected as part of the DC link, which boost functionality further comprises at least one semiconductor switch, which semiconductor switch in closed situation forms a short circuit through the coil, which semiconductor switch comprises input means, which input means is connected to control means. Hereby is achieved that power can be generated more or less independent of the voltage at the grid. In a situation where there is just a small voltage at the grid, the current that is needed for the boost function will be relatively high, but power can be generated at a sufficient voltage level. The high current that is needed will lead to an over dimension of all electrical connections towards the UPS.

The coil can further be connected to the anode of a rectifier, which rectifier has a cathode connected to a capacitor, which capacitor is connected to the input to the power conversion means. The use of an extra rectifier and a capacitor will lead for forming of direct current which direct current is used as input for the conversion means. In this way, the conversion means will be able to generated AC-power with a nearly perfect curvature.

The rectifier can be an active rectifier. By using active rectifiers it is possible to control the input power to the UPS both during operation and in a situation where the UPS is operational.

The UPS can be connected to a control unit, which control unit comprises means for detecting a voltage dip at the grid. Hereby is achieved that the UPS can be controlled from the wind turbine control unit, where the UPS as such is placed in the power line towards the control unit.

Thee UPS comprises at least one bypass switch for a bypass functionality. Hereby is achieved that in some operational situations, the coil in the DC-line can be cut short in order to reduce power loose in the coil.

The UPS can be a multiphase system. Depending on the input to UPS, it can operate as well in a one phase system as in a multi phase system. The only difference seems to be the number of rectifiers at the input. In a one phase system, probably four rectifiers have to b used. In systems using more phases they can be operated with only two rectifiers per phase.

In a method as described in the preamble to claim 11 this can preferably be modified in that the UPS comprises a boost functionality for controlling the voltage level on the DC link, which boost functionality uses the grid as energy source.

Hereby it can be achieved that the UPS is able to operate for a short period after a grid failure. In fact, the UPS will be able to operate as long as a rest of power in the grid exists. The boost functionality will be operational as long as a voltage drop can be achieved, but in situations where the voltage is relatively low, the current necessary for the boost functionality will be relatively high. Therefore an UPS-system as here described will be preferred for operating only a few seconds after a grid failure. Most grid failures have a duration of less than two seconds which means that this UPS-system will prevent any damage caused by all short power failures. In situations where a power failure has a longer duration, the UPS will be able to keep a load in a normal operation in a period of some seconds which is sufficient for the critical functions to shut down. Data might be stored in computer systems where also rotating hard disks are being sent into a parking situation before the power is totally failing. The UPS as described above is a very small unit which only comprises very few electronic components. The UPS will function independently on a battery storage which is usually part of a UPS-system.

The present invention provides an Uninterruptible Power Supply device for a power generating plant connected to a grid comprising a rectifier, a boost converter, a DC link and an inverter, that uses the utility grid as energy source during grid faults and having the rectifier and the inverter dimensioned to match a current level up to the nominal current level of the grid increased by a predetermined multiplying factor. This multiplying factor depends on the expected voltage drop according to the grid requirements.

The present invention can comprise a direct converter like a Matrix converter without a DC link.

Other features and advantages of the present invention will be understood from the following detailed description of an illustrative and by no means limiting embodiment of its object in relation with the enclosed drawings.

### Description of the Drawing

Figure 1 is a schematic view of the wind turbine with an UPS device.
Figures 2a and 2b are schematic views of a known one-phase UPS device for a wind turbine in normal and UPS operation, respectively.
Figures 3a and 3b are schematic views of a one-phase UPS device according to this invention for a wind turbine in normal and UPS operation, respectively.
Fig 4 shows the main components of a one-phase UPS device according to this invention.
Fig. 5 shows the relationship between voltage and current at the turbine connection during the grid failure.

### Detailed Description of the Invention

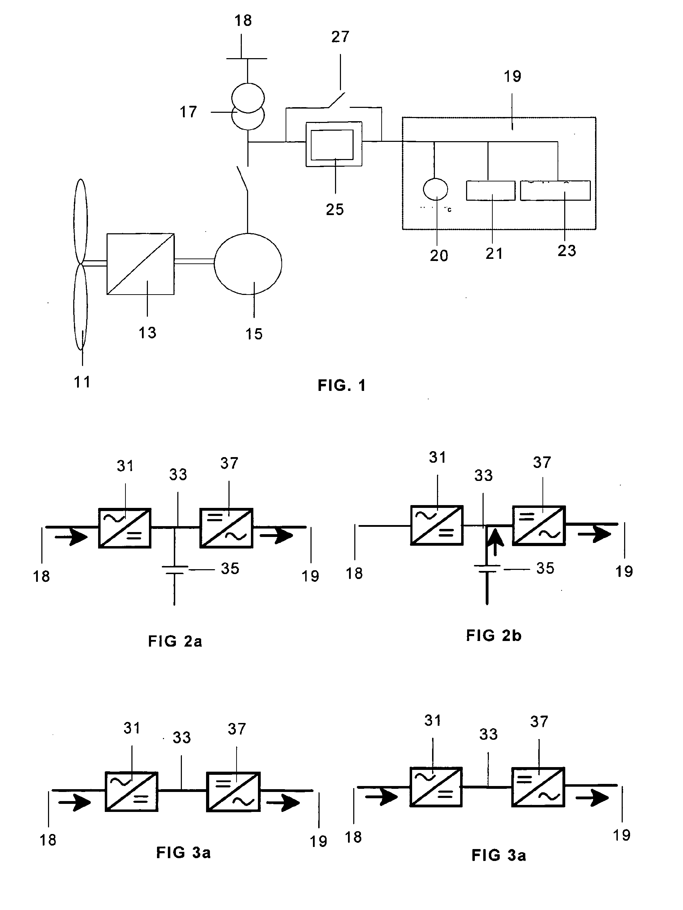

Figure 1 shows a possible schematic diagram over wiring and functions in a wind turbine, which wind turbine comprises a rotor 11, a gearbox 13 and a generator 15. Which generator 15 provides electrical power through a transformer 17 to a public power grid 18. The wind turbine also requires electrical power for a load 19 comprising elements such as a hydraulic pump 20, a control unit 21 and other wind turbine consumption elements 23 and consequently includes an UPS device 25 for the event of a grid fault and a by-pass contactor 27.

In known UPS devices, shown in Figs. 2a and 2b, consisting of a rectifier 31, a DC link 33, a battery pack 35 and an inverter 37, in normal operation (Fig. 2a) the load 19 is fed from the grid 18 and in UPS operation (Fig. 2b) the load 19 is fed from the battery source 35. In normal operation the load 19 is connected to the inverter 37 and the battery pack 35 is being charged by the grid 18 through the rectifier/charger 31. The switching between grid and UPS supply does not cause any interruptions of the supply to the load 19. In case of a fault in the UPS system the load can be supplied directly from the grid 18 by passing the UPS.

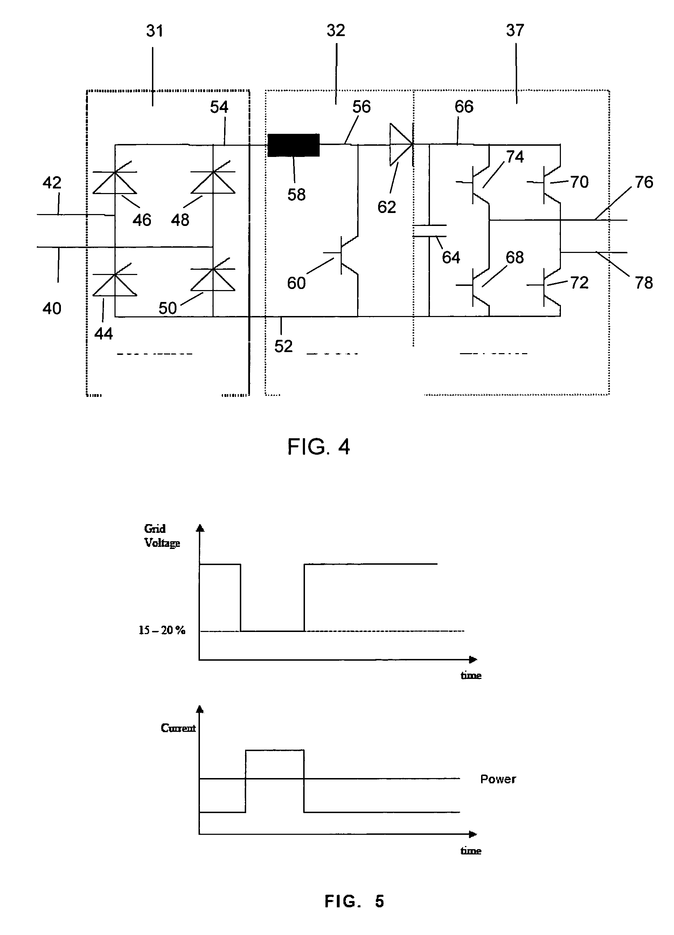

Fig. 3a and 3B shows a possible embodiment for the UPS device according of this invention. The UPS comprises rectifier 31, a DC link 33, and an inverter 37, is fed from the grid 18 in normal operation (Fig. 3a) and also in UPS operation (Fig. 3b) at lower voltage and higher current. Furthermore it is necessary to insert into the UPS device a boost converter 32(fig. 4) behind rectifier 31 to ensure that the voltage level on the DC link 33 is always charged to the correct level.

Fig 4 shows a detailed diagram over the possible embodiment an UPS. Generally, already mentioned under the description of figure 3a and b is shown rectifier means 31, the boost converter 32 and an inverter 37. The rectifier 31 comprises input lines 40 and 42 which input lines 42 are connected to the anode of a semi conductor switch 46. The input line 42 is further connected to the cathode of a semi conductor switch 44. The input line 40 is in the same way connected to the anode of a semi conductor switch and towards the cathode of a semi conductor switch 50. The cathode of the semi conductor switches 46 and 48 are connected to a line 54. Also the anode of the semi conductor switch 44 and 50 are connected to a line 52. The lines 52 and 54 are continuing into the boost converter 32. The line 54 is connected to a coil 58. Another line 56 is further connected to a semi conductor switch 60 and to a diode 62. The semi conductor switch 60 has its other current terminal connected to the line 52. The diode 62 has a cathode connected to a line 66 which line 66 is connected to a capacitor 64. The capacitor 64 is further connected to the line 52. The line 66 is further connected to the semi conductor switches 70 and 74. In the same way, the line 52 is connected to semi conductor switches 68 and 72. The common line from semi conductor switch 74 and semi conductor switch 68 are connected to an outlet line 76. Further, the terminals from the semi conductor switch 70 and the semi conductor switch 72 are connected to each other and to the line 78.

In normal operations, AC-power will be rectified in the rectifier 31 through the lines 40 and 42. A DC-current will be formed in the line 4, and this DC-current will flow though the coil 58 into the line 56 and further through the diode 62 such that a DC-connection directly to the inverter line 66 is generated. Also, the DC-line 52 is heading directly towards the inverter 37. In a situation where the voltage drops over the AC-line 40, 42, the coil 58 comprises magnetic energy stored in the coil and this magnetic energy is used for keeping the current in the coil stable and continuously. In operation in a few milliseconds, the magnetic energy stored in the coil is used and the current through the coil is reduced rapidly. In this situation, the semi conductor switch 60 is switched on and a current starts to flow though the coil 58 and through the semi conductor 60. This current will very rapidly increase and generate a new magnetic field in the coil 58. After a short period, the semi conductor switch 60 is switched off and the current is again flowing from the coil 58 through the diode 62 into the line 66. The capacitor 64 has the function to keep the DC level at line 66 mostly constant in the period when the semi conductor switch 60 is closed. As long as there can be even a very small power supply over the AC lines 40, 42, the boost converter 42 is able to operate. The current flowing in the lines 54, 52, 56 and 66 increases if the voltage between the line 40 and 42 are reduced maybe to less than 50 per cent. Therefore, the lines 54 and 56 and also the zero line 52 have to be over dimensioned up to maybe ten times the normal necessary size.

Figure 5 shows a grid voltage versus time where this grid voltage is reduced for a short period to 15-20%. In the figure below, the current for the same period is shown where the current is increased in the period of the voltage drop.

The UPS does not use a battery pack as energy source, it obtain the needed energy from the grid itself. In this respect, it is to be noted that the grid requirements, such as "Netzanschlussregeln für Hoch- und Höchstspnnung" E.On, Bayreuth 1.August 2003 or "Transmission code 2003" VDN, August 2003 describe that there normally is a residual voltage at the connection point of the turbine in case of a failure on the main utility grid which is expected to be minimum 15% of the nominal voltage.

To use said residual voltage, it is necessary to oversize the electronic components of the UPS system (rectifier and inverter) to match the higher current level. In this respect, a multiplying factor for the nominal current level will be predetermined taking into account the expected voltage drop set in the grid requirements.

As power is proportional to the voltage (S= U*I) it means that if the voltage drops down to 15 % the current must be increased with a multiplying factor of 6,67 (1/0,15) to ensure the same power supply to the auxiliary system. Figure 4 shows the schematic relationship between voltage and current at the turbine connection point during the grid failure. The components must therefore be oversized with the similar factor.

If the voltage drop is outside the requirements stated in the grid requirement then the UPS will also not be required to fulfil its main function (bridging of voltage drops) and as a consequence the turbine will disconnect from the grid.

The UPS will further be used for the power factor correction (PFC) and this will ensure a low THD on the turbine.

The UPS according to the invention should be always on-line, because:
- A totally uninterruptible power supply is possible
- The attached consumers are protected against other line disturbances.

To ensure a high availability of the turbine a connector should bypass the UPS if there is a fault on the UPS system.

In another embodiment of this invention, the rectifier is a passive rectifier and the boost converter is located in front of the rectifier.

In another embodiment of this invention the UPS according to this invention is a multi-phase UPS.

The skilled man would easily understand that the invention is applicable to other grid connected power generating plants such as decentralized plants, photovoltaic etc.

One advantage of the present invention is that chemical batteries are not necessary and therefore:
- Higher temperature range possible
- Less maintenance
- Higher reliability
- Higher Robustness

Other advantage is that the UPS is always online and therefore:
- Good protection against over voltages for the connected auxiliary
- No transition time under a grid failure

Other advantage is that there are low harmonic disturbances, because of the PFC of the boost converter.

Other advantage is that the new UPS may be used in retrofitting older turbines to cope with the grid requirements and as standard in all new wind turbines.

Although the present invention has been fully described in connection with preferred embodiments, it is evident that modifications may be introduced within the scope thereof, not considering this as limited by these embodiments, but by the contents of the following claims.

## Claims

1. Uninterruptible Power Supply, which UPS is connected to a grid, which grid comprises at least one power line, which UPS comprises an input device, which input device comprises rectifier means, , which conversion means is generating an output power supply from the UPS, **characterized in that** the inverter comprises a boost device, which boost device has at least one input line, which input line is connected through rectifier means to the grid, which boost device has at least one output line, which output line is connected to the power conversion means.

2. Uninterruptible Power Supply according to claim 1, **characterized in that** the UPS comprises a DC link, which DC link is connected to power conversion means.

3. Uninterruptible Power Supply according to claim 1 or 2, **characterized in that** the UPS is operating in conjunction with a windturbine, which windturbine grid is connected to the input to the UPS as energy source, which windturbine grid is full or partly in operation in a short period during utility grid faults, in which short period the UPS is in operation.

4. Uninterruptible Power Supply according to one of the claims 1-3, **characterized in that** the UPS is operating in conjunction with a widturbine, which windturbine is connected to a utility grid, which utility grid is connected to the input to the UPS as energy source, which utility grid is full or partly in operation in a short period during windturbine grid faults, in which short period the UPS is in operation.

5. Uninterruptible Power Supply according to one of the claims 1-4, **characterized in that** electrical power for a load is connected through the UPS.

6. Uninterruptible Power Supply according to one of the claims 1-5, **characterized in that** the boost functionality comprises at least one coil, which coil is serial connected as part of the DC link, which boost functionality further comprises at least one semiconductor switch, which semiconductor switch in closed situation forms a short circuit through the coil, which semiconductor switch comprises input means, which input means is connected to control means.

7. Uninterruptible Power Supply according to one of the claims 1-6, **characterized in that** the coil is further connected to the anode of a rectifier, which rectifier has a cathode connected to a capacitor, which capacitor is connected to the input to the power conversion means.

8. Uninterruptible Power Supply according to one of the claims 1-7, **characterized in that** the rectifier (31) is an active rectifier.

9. Uninterruptible Power Supply according to one of the claims 1-8, **characterized in that** the UPS is connected to a control unit, which control unit comprises means for detecting a voltage dip at the grid.

10. Uninterruptible Power Supply according to one of the claims 1-9, **characterized in that** the UPS comprises at least one bypass switch for a bypass functionality.

11. Uninterruptible Power Supply according to one of the claims 1-10, **characterized in that** the UPS is a multiphase system.

12. A method for operating an Uninterruptible Power Supply, where the UPS is connected between a grid and a consumer, where the UPS is rectifying the power from the grid for generating DC, which DC is used as source for an inverter, which inverter generates power for the consumer, **characterized in that** the UPS comprises a boost functionality (32) for controlling the voltage level on the DC link (33), which boost functionality (32) uses the grid as energy source.

## Amended claims

### Amended claims in accordance with Rule 137(2) EPC.

**1.** Uninterruptible Power Supply connected to a grid that comprises at least one power line, which UPS comprises an input device that comprises rectifier means and an output power supply with an inverter, **characterised in that**
- an inverter (37) comprises a boost device (32), which boost device (32) has at least one input line, which input line is connected through a rectifier (31) to the grid (18), which boost device (32) has at least one output line, which output line is connected to an inverter (37),
- the UPS comprises a DC link (33), which DC link (33) is connected to a rectifier (31) and an inverter (37),
- and during voltage drops equal or less than 15% of nominal voltage the boost device use the residual voltage to get energy out of the connection.

**2.** Uninterruptible Power Supply according to claim 1, **characterized in that** the UPS is operating as the same time than the windturbine (11, 13, 15, 17) is running, which windturbine grid (18) is connected to
- the input to the UPS as energy source, which windturbine grid (18) is full or partly in operation in a short period during utility grid faults, in which short period the UPS is in operation.
- a utility grid (18), which utility grid is connected to the input to the UPS as energy source, which utility grid is full or partly in operation in a short period during windturbine grid faults, in which short period the UPS is in operation.

**3.** Uninterruptible Power Supply according to one of the previous claims, **characterized in that** electrical power for a load (19) is connected through the UPS.

**4.** Uninterruptible Power Supply according to one of the previous claims, **characterized in that** the boost functionality (32) comprises at least one coil (58), which coil is serial connected as part of the DC link (33), which boost functionality (32) further comprises at least one semiconductor switch, which semiconductor switch in closed situation forms a short circuit through the coil (58), which semiconductor switch comprises input means, which input means is connected to control means.

**5.** Uninterruptible Power Supply according to one of the previous claims, **characterized in that** the coil (58) is further connected to the anode (46) of a rectifier, which rectifier has a cathode (44) connected to a capacitor, which capacitor is connected to the input to the power conversion means.

**6.** Uninterruptible Power Supply according to one of the previous claims, **characterized in that** the rectifier (31) is an active rectifier.

**7.** Uninterruptible Power Supply according to one of the previous claims, **characterized in that** the UPS is connected to a control unit, which control unit comprises means for detecting a voltage dip at the grid.

**8.** Uninterruptible Power Supply according to one of the previous claims, **characterized in that** the UPS comprises at least one bypass switch for bypass functionality.

**9.** Uninterruptible Power Supply according to one of the previous claims, **characterized in that** the UPS is a multiphase system.

**10.** A method for operating an Uninterruptible Power Supply, where the UPS is connected between a grid (18) and a consumer (19), where the UPS is rectifying the power from the grid for generating DC, which DC is used as source for an inverter (37), which inverter generates power for the consumer (19), **characterized in that** the UPS comprises a boost functionality (32) for controlling the voltage level on the DC link (33), which boost functionality (32) uses the residual voltage to get energy out of the connection when voltage drop is 15% of nominal voltage.
